Europäisches Patentamt

(19) European Patent Office

Office européen des brevets

(11) Veröffentlichungsnummer: **0 231 942**
B1

(12) # EUROPÄISCHE PATENTSCHRIFT

(45) Veröffentlichungstag der Patentschrift:
10.01.90

(51) Int. Cl.⁴: **B23K 11/10, B23K 11/30**

(21) Anmeldenummer: 87101541.8

(22) Anmeldetag: 05.02.87

(54) **Punktschweissvorrichtung für elektrisches Widerstandsschweissen.**

(30) Priorität: 07.02.86 DE 3603966

(73) Patentinhaber: **Siemens Aktiengesellschaft, Wittelsbacherplatz 2, D-8000 München 2(DE)**

(43) Veröffentlichungstag der Anmeldung:
12.08.87 Patentblatt 87/33

(72) Erfinder: **Hillebrand, Bernhard, Schanzenbachstrasse 17, D-8000 München 70(DE)**
Erfinder: **Hellmüller, Josef, Lättenstrasse 6, CH-8954 Geroldswil(CH)**

(45) Bekanntmachung des Hinweises auf die Patenterteilung:
10.01.90 Patentblatt 90/2

(84) Benannte Vertragsstaaten:
AT BE CH DE FR GB IT LI SE

(56) Entgegenhaltungen:
EP-A- 0 176 892
DE-A- 2 017 164
DE-A- 3 027 498
DE-C- 537 791

# Beschreibung

Die Erfindung betrifft eine Punktschweißvorrichtung für elektrisches Widerstandsschweißen nach dem Oberbegriff des Anspruchs 1.

Bei derartigen Punktschweißvorrichtungen werden anstelle der sonst üblichen stabförmigen Punktelektroden ring- oder scheibenförmigen Elektroden verwendet, die nach einer vorgebbaren Anzahl von Schweißungen jeweils um gleichmäßige Teilungen weitergedreht werden. Nach jeder dieser Elektrodenfortschaltungen bilden immer neue Stellen des Elektrodenumfangs Berührungspunkte zum Stromübergang, so daß sich eine erhebliche Verbesserung des Standzeitverhaltens der Elektroden ergibt. In die Elektroden in gleichmäßiger Teilung eingebrachte Bohrungen ermöglichen eine einfache Elektrodenfortschaltung von Hand, bei welcher die Elektroden jeweils um eine Bohrung weitergedreht und durch Einstecken eines Stiftes in die weitergedrehte Bohrung fixiert werden.

Bei der bekannten Punktschweißvorrichtung erfolgt die nach einer vorgebbaren Anzahl von Schweißungen erforderliche manuelle Elektrodenweiterdrehung bei Stillstand der Vorrichtung, d. h. die Taktfolge wird jeweils für eine gewisse Zeit unterbrochen. Eine Erhöhung der Taktfolge bzw. des Automatennutzungsgrades erfordert daher gleichzeitig eine rasche und selbsttätige Fortschaltung der ring- oder scheibenförmigen Elektroden.

Der Erfindung liegt die Aufgabe zugrunde, eine Punktschweißvorrichtung für elektrisches Widerstandsschweißen zu schaffen, bei welcher durch die selbsttätige Weiterschaltung ring- oder scheibenförmiger Elektroden eine beträchtliche Erhöhung der Taktfolge und des Automatennutzungsgrades ermöglicht wird.

Diese Aufgabe wird bei einer gattungsgemäßen Punktschweißvorrichtung durch die kennzeichnenden Merkmale des Anspruchs 1 gelöst.

Der Erfindung liegt die Erkenntnis zugrunde, daß die schrittweise Weiterdrehung der Elektroden durch mechanische Fortschaltvorrichtungen nur dann sinnvoll ist, wenn zumindest die der beweglichen Elektrode zugeordnete Fortschaltvorrichtung aus einem Schaltrad, einem bistabilen Schaltanker und einer ortsfest angeordneten Betätigungseinrichtung besteht. Durch diese Entkopplung wird erreicht, daß die Masse der ortsfeste Betätigungseinrichtung für den Elektrodenhub der beweglichen Elektrode keine Rolle spielt. Das Schaltrad und der bistabile Schaltanker können derart massearm ausgeführt werden, daß die für das Schweißen und die angestrebte Erhöhung der Taktfolge erforderlichen Beschleunigungen der hin- und hergehenden Teile auch realisierbar sind.

Gemäß einer bevorzugten Ausgestaltung der Erfindung ist der bistabile Schaltanker mittels eines Sprungwerkes von einer Schaltstellung in die andere Schaltstellung umschaltbar. Derartige Sprungwerke, die beispielsweise bei Kippschaltern eingesetzt werden, können besonders einfach und massearm realisiert werden.

Vorzugsweise umfaßt die Betätigungseinrichtung zwei den Armen des Schaltankers zugeordnete Betätigsglieder. Derartige Betätigungsglieder, die zweckmäßigerweise durch pneumatische oder hydraulische Zylinder gebildet sind, müssen nur schnell auf den jeweiligen Arm des Schaltankers einwirken, um eine schlagartige Umschaltung bei gleichzeitiger Fortschaltung der Elektrode um eine Teilung zu bewirken. Durch die vorab erwähnte Entkopplung kann der Rückhub unabhängig von der Elektrodenbewegung erfolgen.

Eine weitere Verringerung der bewegten Massen ergibt sich dadurch, daß der der beweglichen Elektrode zugeordnete bewegliche Elektrodenarm über zwei parallel im Abstand zueinander angeordnete Blattfedern an einem ortsfesten Halterahmen aufgehängt ist. Bei einer derartigen Parallelführung der beweglichen Elektrode kann dann die Schweißkraft mit hoher Präzision durch eine zwischen beweglichem Elektrodenarm und ortsfestem Halterahmen angeordnete Druckfeder erzeugt werden.

Gemäß einer weiteren bevorzugten Ausgestaltung der Erfindung ist der bewegliche Elektrodenarm mit Hilfe einer im ortsfesten Halterahmen gelagerten Exzenterscheibe gegen die Kraft der Druckfeder hebbar. Durch den Antrieb der Exzenterscheibe wird dann zunächst die bewegliche Elektrode nach oben angehoben und dann wieder durch die Druckfeder nach unten gedrückt, bis sie auf dem Schweißgut aufsitzt. Durch Weiterdrehen der Exzenterscheibe findet dann eine Entkoppelung statt, die ein freies Nachsacken der Elektrode beim Schweißvorgang ermöglicht. Ist die Exzenterscheibe zwischen den beiden Blattfedern angeordnet, so kann eine besonders kompakte Bauweise erzielt werden.

Bei den in der erfindungsgemäßen Punktschweißvorrichtung angestrebten hohen Taktfolgen ist es auch besonders günstig, wenn der Schweißstrom ausschließlich über die beiden Blattfedern dem beweglichen Elektrodenarm zuführbar ist. Hierdurch wird einerseits eine definierte Zu fuhr des Schweißstroms ermöglicht, während andererseits die Masse des erforderlichen Schweißkabels sich nicht nachteilig auf die rasche Hubbewegung des beweglichen Elektrodenarms auswirken kann.

Ein Ausführungsbeispiel der Erfindung ist in der Zeichnung dargestellt und wird im folgenden näher beschrieben.

Es zeigen:

Fig. 1 eine Punktschweißvorrichtung für elektrisches Widerstandsschweißen in stark vereinfachter schematischer Darstellung und

Fig. 2 das Prinzip der mechanischen Fortschaltvorrichtung für die schrittweise Weiterdrehung der beweglichen Elektrode der Punktschweißvorrichtung gemäß Fig. 1.

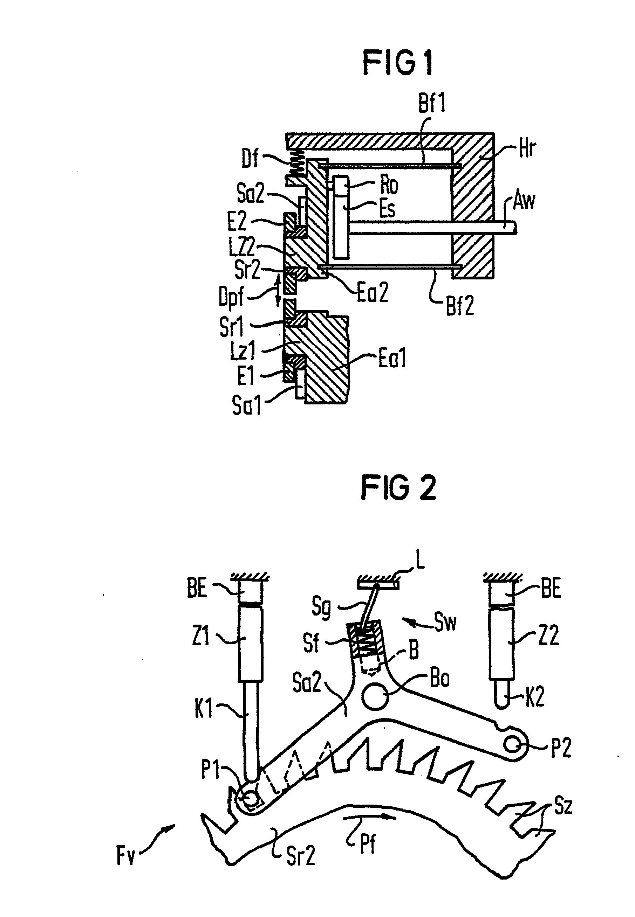

Im unteren Bereich des in Fig. 1 gezeigten Längsschnittes durch eine erfindungsgemäße Punktschweißvorrichtung ist ein Teil eines ortsfest angeordneten Elektrodenarms Ea1 zu erkennen, auf dessen Lagerzapfen Lz1 ein Schaltrad Sr1 drehbar angeordnet ist. Das Schaltrad Sr1 trägt seinerseits eine ringförmige, ortsfeste, untere Elektrode E1, deren nicht näher dargestellte Befestigung auf dem Schaltrad Sr1 im Bereich einen raschen Austausch ermöglicht. Das Schaltrad Sr1 und die untere Elektrode E1 werden nach einer vorgebbaren Anzahl von Schweißungen selbsttätig um eine Teilung weitergedreht, wobei von der hierzu erforderlichen Fortschaltvorrichtung in Fig. 1 lediglich noch ein Schaltanker Sa1 zu erkennen ist.

Oberhalb der unteren Elektrode E1 ist eine obere, bewegliche Elektrode E2 angeordnet, die ebenfalls ringförmig ausgebildet und auf einem Schaltrad Sr2 auswechselbar befestigt ist. Das Schaltrad Sr2 ist auf dem Lagerzapfen Lz2 eines oberen, beweglichen Elektrodenarmes Ea2 drehbar angeordnet, so daß die obere, bewegliche Elektrode E2 ebenfalls nach einer vorgebbaren Anzahl von Schweißungen selbsttätig um eine Teilung weitergedreht werden kann. Auch von der hierzu erforderlichen Fortschaltvorrichtung ist in Fig. 1 lediglich noch ein mit Sa2 bezeichneter Schaltanker zu erkennen.

Die Aufhängung des oberen, beweglichen Elektrodenarmes Ea2 in einem ortsfest angeordneten Halterahmen Hr ist durch zwei parallel im Abstand zueinander angeordnete Blattfedern Bf1 und Bf2 als Parallelführung ausgebildet, welche eine reibungsfreie und äußerst präzise Hub- und Senkbewegung des oberen Elektrodenarmes Ea2 in Richtung des Doppelfeiles Dpf ermöglicht. Der für den Elektrodenhub beim Punktschweißen erforderliche Antrieb erfolgt über eine Antriebswelle Aw, eine Exzenterscheibe Es und eine am oberen, beweglichen Elektrodenarm Ea2 drehbar befestigte Rolle Ro. Die im vertikalen Schenkel des winkelförmigen Halterahmens Hr drehbar gelagerte Antriebswelle Aw treibt die Exzenterscheibe Es an, welche zunächst den beweglichen, oberen Elektrodenarm Ea2 über die Rolle Ro nach oben drückt und dabei die eine zwischen dem horizontalen Schenkel des Halterahmens Hr und einem Fortsatz des Elektrodenarmes Ea2 angeordnete Druckfeder Df spannt. Danach drückt die Druckfeder Df beim Weiterdrehen der Exzenterscheibe Es den Elektrodenarm Ea entsprechend der Kontur des Scheibenumfangs nach unten, bis die obere Elektrode E2 auf dem zwischen die Elektroden E1 und E2 einzubringenden Schweißgut aufsitzt. Anschließend führt das Weiterdrehen der Exzenterscheibe Es zu einer Entkoppelung, durch welche ein freies Nachsacken der beweglichen, oberen Elektrode E2 beim Schweißvorgang gewährleistet ist. Die Schweißkraft wird dabei durch die als Schraubenfeder ausgebildete Druckfeder Df aufgebracht. Eine präzise Einstellung der gewünschten Schweißkraft wird durch eine in Fig. 1 nicht näher dargestellte Einstellung der Federkraft der Druckfeder Df ermöglicht.

Die Zufuhr des Schweißstromes zu der beweglichen Elektrode E2 erfolgt über den Halterahmen Hr, die beiden Blattfedern Bf1 und Bf2, den beweglichen Elektrodenarm Ea2 und das Schaltrad Sr2. Um eine unerschwünschte Zufuhr des Schweißstromes über die Druckfeder Df oder die Antriebswelle Aw zu verhindern, sind in der Zeichnung nicht näher dargestellte elektrische Isolierungen vorgesehen.

Die beiden Elektroden E1 und E2 werden nach einer vorgebbaren Anzahl von Schweißungen um jeweils eine Teilung weitergedreht, wobei das Prinzip der für die Weiterdrehung der beweglichen Elektrode E2 vorgesehenen Fortschaltvorrichtung Fv anhand der Fig. 2 näher erläutert wird. Wie dort zu erkennen ist, trägt das Schaltrad Sr2 an seinem Umfang mit Sz bezeichnete Schaltzähne, die in gleichmäßiger Teilung angeordnet sind und abgeschrägte Zahnflanken besitzen. Oberhalb des Schaltrades Sr2 befindet sich der bistabile Schaltanker Sa2, dessen beide hier als Stifte ausgebildete Paletten P1 und P2 abwechselnd in die Verzahnung des Schaltrades Sr2 greifen. Die hierzu erforderliche Drehung bzw. Schwenkung des Schaltankers Sa2 erfolgt um einen Bolzen Bo, der seinerseits an dem oberen, beweglichen Elektrodenarm Ea2 (vergl. Fig. 1) befestigt ist. Die bistabile Lage des Schaltankers Sa2 wird durch ein insgesamt mit Sw bezeichnetes Sprungwerk ermöglicht, welches wie bei einem Kippschalter ausgebildet ist und aus einer in eine Bohrung B des Schaltankers Sa2 eingesetzten Schraubenfeder Sf, einem blättchenförmigen Springglied Sg und einem an dem oberen, beweglichen Elektrodenarm Ea2 befestigten Lager L für das Springglied Sg besteht.

Die insgesamt mit Be bezeichnete Betätigungseinrichtung der Fortschaltvorrichtung Fv umfaßt zwei ortsfest und im Abstand zueinander angeordnete pneumatische Zylinder Z1 und Z2, die beispielsweise an dem Halterahmen Hr (vergl. Fig. 1) befestigt sind und abwechselnd auf die Arme des bistabilen Schaltankers Sa2 einwirken. Bei der in Fig. 2 dargestellten Lage hat die Kolbenstange K1 des pneumatischen Zylinders Z1 gerade die Palette P1 zwischen zwei Schaltzähne Sz des Schaltrades Sr2 gedrückt und dadurch das Schaltrad Sr2 um eine der halben Zahnteilung entsprechenden Teilung in Richtung des Pfeiles Pf weitergedreht. Dieser Vorgang wurde zu einem Zeitpunkt durchgeführt, zu dem die bewegliche, obere Elektrode E2 (vergl. Fig. 1) vom Schweißgut abgehoben hat. Die Kolbenstange K1 des pneumatischen Zylinders Z1 wird nach der erfolgten Umschaltung des bistabilen Schaltankers Sa2 sofort wieder zurückgezogen. Während der nächsten Serie von Schweißungen verbleibt dann die Palette P1 in der dargestellten Lage im Eingriff zwischen den Schaltzähnen Sz und hemmt dadurch das Schaltrad Sr2. Erst nach Erreichen einer vorgebbaren Anzahl von Schweißungen wird dann zur nächsten Elektrodenfortschaltung der andere Zylinder Z2 betätigt, wobei das entsprechende Signal hierzu beispielsweise durch einen Zähler bereitgestellt wird. Durch die Kolbenstange K2 des pneumatischen Zylinders Z2 wird dann der zugeordnete Arm des Schaltankers Sa2 nach unten gedrückt, wobei die Schraubenfeder Sf zunächst zusammengedrückt und das Springglied Sg im Lager L geschwenkt wird. Bei Überschreitung der labilen Gleichgewichtslage des Sprungwerkes Sw erfolgt dann die Umschaltung schlagartig, wobei die Palette P1 außer Eingriff und die Palette P2 gleichzeitig in Eingriff gebracht wird. Die Palette P2 gleitet dabei auf der schrägen Zahnflanke des zugeordneten Schaltzahnes Sz in die benachbarte Zahnlücke und bewegt dadurch das Schaltrad Sr2 wiederum um eine der halben Zahnteilung entsprechende Teilung in Richtung des Pfeiles Pf weiter.

Die Elektrodenfortschaltung der unteren Elektrode E1 wird gleichzeitig vorgenommen, wobei die entsprechende Fortvorrichtung in gleicher Weise wie die in Fig. 2 dargestellte Fortschaltvorrichtung Fv aufgebaut ist.

Die vorstehend beschriebene Punktschweißvorrichtung wurde für das schnellaufende Verschweißen von Kontaktfedern und Stiften entwickelt. Der Elektrodenhub der oberen, beweglichen Elektrode E2 betrug 6/10 mm während die Schweißkraft durch die Druckfeder Df auf etwa 60 N eingestellt wurde. Die beiden Schalträder Sr1 und Sr2 besitzen jeweils 40 Schaltzähne Sz, d. h. es wurden 80 Fortschaltungen der Elektroden E1 und E2 ermöglicht. Bis zu einem Auswechseln der beispielsweise aus einer Legierung mit 97 % Kupfer, 2 % Chrom und 1 % Zirkon bestehenden Elektroden E1 und E2 konnten zwischen 234 000 und 390 000 Schweißungen durchgeführt werden, was bei den realisierten hohen Taktfolgen Standzeiten zwischen etwa 10 und 16 Stunden entsprach. Derart hohe Taktfolgen von beispielsweise weniger als 150 ms pro Takt konnten durch den massearmen Aufbau der beweglichen Elektrode E2 bzw. des beweglichen Elektrodenarmes Ea2 erzielt werden.

Ist der Außendurchmesser der Elektrode durch die abgearbeiteten Segmentabschnitte verbraucht, kann er um einen bestimmten Wert (z. B. 0,5 mm) nachgearbeitet werden.

Danach sind beide Haltearme um den halben Wert (0,25 mm) nachzustellen, damit die festgelegte Schweißebene erhalten bleibt.

Bezugszeichenliste für 85 E 1548 DE

Aw Antriebswelle
B Bohrung
Bf1, Bf2 Blattfedern
Be Betätigungseinrichtung
Bo Bolzen
Df Druckfeder
Dpf Doppelpfeil
E1 ortsfeste, untere Elektrode
E2 bewegliche, obere Elektrode
Ea1 ortsfester, unterer Elektrodenarm
Ea2 beweglicher, oberer Elektrodenarm
Es Exzenterscheibe
Fv Fortschaltvorrichtung
Hr Halterahmen
K1, K2 Kolbenstange
L Lager
Lz1, Lz2 Lagerzapfen
P1, P2 Paletten
Pf Pfeil
Ro Rolle
Sa1, Sa2 Schaltanker
Sf Schraubenfeder
Sg Springglied
Sw Sprungwerk
Sr1, Sr2 Schaltrad
Sz Schaltzahn
Z1, Z2 hydraulischer Zylinder

## Patentansprüche

1. Punktschweißvorrichtung für elektrisches Widerstandsschweißen mit nach einer vorgebbaren Anzahl von Schweißungen schrittweise um gleichmäßige Teilungen weiterdrehbaren ring- oder scheibenförmigen Elektroden, dadurch **gekennzeichnet,** daß für die schrittweise Weiterdrehung der Elektroden (E1, E2) mechanische Fortschaltvorrichtungen (Fv) vorgesehen sind und daß zumindest die der beweglichen Elektrode (E2) zugeordnete Fortschaltvorrichtung (Fv) aus einem Schaltrad (Sr2), einem bistabilen Schaltanker (Sa2) und einer ortsfest angeordneten Betätigungseinrichtung (Be) besteht.

2. Punktschweißvorrichtung nach Anspruch 1, dadurch **gekennzeichnet,** daß der bistabile Schaltanker (Sa2) mittels eines Sprungwerkes (Sw) von einer Schaltstellung in die andere Schaltstellung umschaltbar ist.

3. Punktschweißvorrichtung nach Anspruch 1 oder 2, dadurch **gekennzeichnet,** daß die Betätigungseinrichtung (Be2) den Armen des Schaltankers (Sa2) zugeordnete Bestätigungsglieder umfaßt.

4. Punktschweißvorrichtung nach Anspruch 3, dadurch **gekennzeichnet,** daß die Betätigungsglieder durch pneumatische oder hydraulische Zylinder (Z1, Z2) gebildet sind.

5. Punktschweißvorrichtung nach einem der vorhergehenden Ansprüche, dadurch **gekennzeichnet,** daß der der beweglichen Elektrode (E2) zugeordnete bewegliche Elektrodenarm (Ea2) über zwei parallel im Abstand zueinander angeordnete Blattfedern (Bf1, Bf2) an einem ortsfesten Halterahmen (Hr) aufgehängt ist.

6. Punktschweißvorrichtung nach Anspruch 5, dadurch **gekennzeichnet,** daß die Schweißkraft durch eine zwischen beweglichem Elektrodenarm (Ea2) und ortsfesten Halterahmen (Hr) angeordnete Druckfeder (Df) erzeugbar ist.

7. Punktschweißvorrichtung nach Anspruch 6, dadurch **gekennzeichnet,** daß der bewegliche Elektrodenarm (Ea2) mit Hilfe einer im ortsfesten Halterahmen (Hr) gelagerten Exzenterscheibe (Es) gegen die Kraft der Druckfeder (Df) hebbar ist.

8. Punktschweißvorrichtung nach Anspruch 7, dadurch **gekennzeichnet,** daß die Exzenterscheibe (Es) zwischen den beiden Blattfedern (Bf1, Bf2) angeordnet ist.

9. Punktschweißvorrichtung nach einem der Ansprüche 5 bis 8, dadurch **gekennzeichnet,** daß der Schweißstrom ausschließlich über die beiden Blattfedern (Bf1, Bf2) dem beweglichen Elektrodenarm (Ea2) zuführbar ist.

## Claims

1. Electrical resistance spot welding apparatus, comprising annular or disc-shaped electrodes which can be rotated further step-by-step by uniform pitches after a predeterminable number of welds, characterized in that mechanical stepping devices (Fv) are provided for the step-by-step further rotation of the electrodes (E1, E2), and in that at least the stepping device (Fv) allocated to the movable electrode (E2) consists of an indexing gear (Sr2), a bistable indexing armature (Sa2) and an actuating means (Be) arranged in a fixed position.

2. Spot welding apparatus according to Claim 1, characterized in that the bistable indexing armature (Sa2) can be changed over from one indexing position to the other indexing position by means of a snap-action mechanism (Sw).

3. Spot welding apparatus according to Claim 1 or 2, characterized in that the actuating means (Be2) comprises actuating members allocated to the arms of the indexing armature (Sa2).

4. Spot welding apparatus according to Claim 3, characterized in that the actuating members are formed by pneumatic or hydraulic cylinders (Z1, Z2).

5. Spot welding apparatus according to any of the preceding claims, characterized in that the movable electrode arm (Ea2) allocated to the movable electrode (E2) is suspended from a fixed retaining frame (Hr) via two leaf springs (Bf1, Bf2) arranged in parallel at a distance from each other.

6. Spot welding apparatus according to Claim 5, characterized in that the welding force can be produced by a compression spring (Df) arranged between movable electrode arm (Ea2) and fixed retaining frame (Hr).

7. Spot welding apparatus according to Claim 6, characterized in that the movable electrode arm (Ea2) can be lifted against the force of the compression spring (Df) by means of an eccentric disc (Es) mounted in the fixed retaining frame (Hr).

8. Spot welding apparatus according to Claim 7, characterized in that the eccentric disc (Es) is arranged between the two leaf springs (Bf1, Bf2).

9. Spot welding apparatus according to any of Claims 5 to 8, characterized in that the welding current can be supplied to the movable electrode arm (Ea2) solely via the two leaf springs (Bf1, Bf2).

**Revendications**

1. Appareil de soudage par points selon le procédé de soudage électrique par résistance, comprenant des électrodes annulaires ou discoïdes qui peuvent être avancées pas à pas, par rotation, chaque fois qu'un nombre de soudages pouvant être préfixé a été atteint, l'avancement étant opéré par des pas réguliers, caractérisé en ce que des dispositifs mécaniques d'avancement (Fv) sont prévus pour tourner les électrodes (E1, E2) pas à pas et qu'au moins le dispositif d'avancement (Fv) coordonné à l'électrode mobile (E2) est formé d'une roue d'échappement (Sr2), d'une ancre d'échappement bistable (Sa2) et d'un dispositif de commande (Be) agencé fixe.

2. Appareil selon la revendication 1, caractérisé en ce que l'ancre bistable (Sa2) peut être basculée de l'une à l'autre position au moyen d'un mécanisme à passage brusque (Sw).

3. Appareil selon la revendication 1 ou 2, caractérisé en ce que le dispositif de commande (Be) comprend des organes de commande coordonnés aux bras de l'ancre (Sa2).

4. Appareil selon la revendication 3, caractérisé en ce que les organes de commande sont constitués par des vérins pneumatiques ou hydrauliques (Z1, Z2).

5. Appareil selon une des revendications précédentes, caractérisé en ce que le bras porte-électrode mobile (Ea2) coordonné à l'électrode mobile (E2), est suspendu à un cadre de support fixe (Hr) par l'intermédiaire de deux ressorts plats (Bf1, Bf2) disposés parallèlement à distance l'un de l'autre.

6. Appareil selon la revendication 5, caractérisé en ce que la force de soudage est produite par un ressort de compression (Df) placé entre le bras porte-électrode mobile (Ea2) et le cadre de support fixe (Hr).

7. Appareil selon la revendication 6, caractérisé en ce que le bras porte-électrode mobile (Ea2) est relevable, contre la force du ressort de compression (Df), à l'aide d'un disque d'excentrique (Es) monté rotatif dans le cadre de support fixe (Hr).

8. Appareil selon la revendication 7, caractérisé en ce que le disque d'excentrique (Es) est monté entre les deux ressorts plats (Bf1, Bf2).

9. Appareil selon une des revendications 5 à 8, caractérisé en ce que le courant de soudage est amené exclusivement à travers les deux ressorts plats (Bf1, Bf2) au bras porte-électrode mobile (Ea2).

# FIG 1

Bf1

Hr

Df

Sa2

E2

LZ2

Sr2

Dpf

Sr1

Lz1

E1

Sa1

Ro

Es

Aw

Ea2

Bf2

Ea1

# FIG 2

BE

L

Sg

Sw

Z1

Sf

B

BE

Sa2

Bo

Z2

K1

K2

P1

P2

Fv

Sr2

Pf

Sz